# EUROPÄISCHE PATENTSCHRIFT

(11) **EP 1 725 915 B1**
(45) Veröffentlichungstag und Bekanntmachung des Hinweises auf die Patenterteilung: **07.05.2008**
(21) Anmeldenummer: 05707698.6
(22) Anmeldetag: 03.03.2005
(51) Int. Cl.: G05B 17/02, F02D 41/26

(54) **PROZESSSTEUERSYSTEM**
PROCESS CONTROL SYSTEM
SYSTEME DE COMMANDE DE PROCESSUS

(30) Priorität: 04.03.2004 DE 102004011236
(43) Veröffentlichungstag der Anmeldung: 29.11.2006
(73) Patentinhaber: Bayerische Motorenwerke Aktiengesellschaft, 80809 München (DE)
(72) Erfinder: KRÄMER, Gerd, 82065 Baierbrunn (DE); KONRAD, Heiko, 82065 Baierbrunn (DE)
(86) Internationale Anmeldenummer: PCT/EP2005/002257
(87) Internationale Veröffentlichungsnummer: WO 2005/085964

(56) Entgegenhaltungen:
- US-A- 5 539 638
- US-A- 5 598 329
- US-A1- 2003 078 684
- US-A1- 2003 208 287
- US-A1- 2003 221 669
- US-B1- 6 256 575

## Beschreibung

Die Erfindung betrifft ein Prozesssteuersystem gemäß dem Oberbegriff des Anspruchs 1.

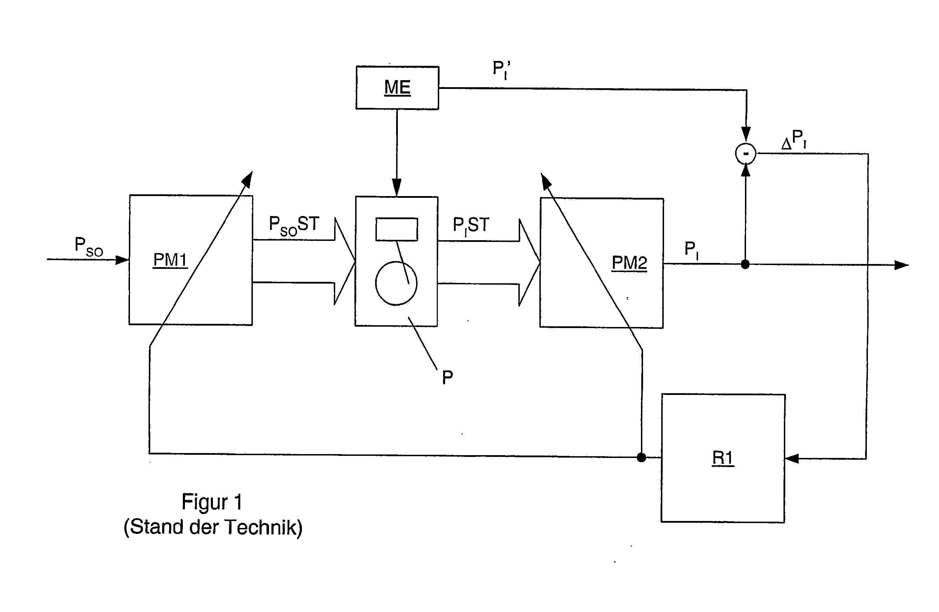

Es sind bereits Prozesssteuersysteme gemäß Figur 1 bekannt (z.B. Prozesssteuersystem zur Befüllung des Brennraumes eines Brennkraftmaschinenzylinders bei einem Fahrzeug der aktuellen Baureihe BMW 520i, Modelljahr 2004), bei denen ein Prozess - beispielsweise die Befüllung des Brennraumes einer Brennkraftmaschine mit einem gewünschten Luft/Gasgemisch - anhand eines Prozessmodells bzw. anhand einzelner Teilprozessmodelle realisiert wird. Dabei werden beispielsweise mittels einem ersten Prozessmodellteil PM1 in Form einer Laststeuerung, aufgrund einer durch den Fahrer vorgegebenen Sollfüllung Sollstellgrößen zur Ansteuerung einzelner Laststellglieder ermittelt.

Ferner wird mittels einem zweiten Prozessmodell PM2 in Form einer Lasterfassung, aufgrund aus dem Prozess ermittelter Iststellgrößen der Laststellglieder eine Istfüllung des Brennraums berechnet und parallel zur Berechnung dieser Istfüllung über Sensoren, beispielsweise einen HFM-Sensor, die Istfüllung gemessen. Die gemessene und die berechnete Istfüllung werden anschließend miteinander verglichen und die Differenz der Istfüllungen auf.einen Massenstromregler geführt, der wiederum über sein Ausgangssignal auf die beiden Prozessmodelle zurückwirkt. Da ein Modell zur Beobachtung eines Prozesses invertierbar sein muss, müssen die Prozessmodelle PM1 und PM2 invertierbar sein - PM1 muss demnach in PM2 umrechenbar bzw. überführbar sein und umgekehrt. Um diese Invertierbarkeit jederzeit gewährleisten zu können, sind nur sehr vereinfachte und daher zumeist auch nur sehr ungenaue Prozessmodelle im Einsatz.

Aus den Druckschriften US 2003/0221 669 A1, US 5,539,638, US 2003/0208287 A1, US 2003/0078684 A1 und US 5,598,329 sind solche bekannte Prozesssteuersysteme zu entnehmen, die ein invertierbares Modell des Prozesses brauchen. Aus der Druckschrift US 6,256,575 B1 ist weiter ein Prozesssteuer-system bekannt, bei dem die Invertierung des Prozessmodells durch Iteration anstatt analytisch erfolgt.

Der Erfindung liegt die Aufgabe zugrunde, ein Prozesssteuersystem erhöhter Genauigkeit zu schaffen. Erfindungsgemäß wird die Aufgabe der Erfindung durch die Gesamtheit der Merkmale des Anspruchs 1 gelöst, während vorteilhafte Weiterbildungen der Erfindung in den Unteransprüchen beschrieben sind.

Ein Prozesssteuersystem gemäß der Erfindung umfasst ein erstes Prozessmodell für die Ansteuerung zumindest eines Prozessstellglieds derart, dass aus mindestens einer, dem ersten Prozessmodell zugeführten Prozess-Sollgröße mindestens eine Prozess-Sollstellgröße für die Ansteuerung des mindestens einen Prozessstellgliedes generiert wird. Weiterhin ist ein zweites Prozessmodell vorhanden, welches aus mindestens einer Prozess-Iststellgröße des mindestens einen Prozessstellgliedes eine Prozess-Istgröße generiert, wobei das erste Prozessmodell durch Invertierung des zweiten Prozessmodells abbildbar (in dieses überführbar) ist. Ferner ist gemäß der Erfindung ein drittes Prozessmodell vorhanden, welches zur Generierung einer - im wesentlichen der über das zweite Prozessmodell generierten Prozess-Istgröße entsprechenden - Vergleichs-Prozess-Istgröße dient. Das dritte Prozessmodell ist dabei von deutlich höherer Genauigkeit und weist zumindest einen nicht invertierbaren Bestandteil auf derart, dass das dritte Prozessmodell insgesamt nicht durch Invertierung in das erste Prozessmodell überführbar ist. Des Weiteren wird gemäß Erfindung aus der Prozess-Istgröße und der Vergleichs-Prozess-Istgröße eine Prozess-Istgrößen-Differenz gebildet und diese über eine erste Regeleinheit auf das erste und das zweite Prozessmodell zurückgeführt.

In einer bevorzugten Weiterbildung der Erfindung sind Mittel zur messtechnischen Erfassung einer Vergleichs-Prozess-Istgröße vorhanden, wobei eine aus der gemessenen Vergleichs-Prozess-Istgröße und der über das dritte Prozessmodell ermittelten Prozess-Istgröße gebildete weitere Prozess-Istgrößen-Differenz über eine weitere Regeleinheit auf das dritte Prozessmodell zurückgeführt ist.

Eine besonders bevorzugte Anwendung der Erfindung findet sich in der Lasterfassung und in der Laststeuerung für den Verbrennungsmotor eines Kraftfahrzeugs.

Für die Steuerung von Brennkraftmaschinen, ist die exakte Kenntnis der pro Arbeitsspiel in die Brennräume der Zylinder einströmenden Luftmasse - die auch als Last bezeichnet wird - von großer Bedeutung, da auf der Basis der Last die Berechnung der Einspritzzeit für den Kraftstoff und die Berechnung des Zündzeitpunktes für das im Brennraum befindliche Luft-Kraftstoffgemisch erfolgt. Etwa vorhandene Ungenauigkeiten im Lastsignal führen bei der Regelung/Steuerung des Prozesses in der Regel zu einem nachteiligen Verhalten bezüglich Emissionen, Fahrbarkeit und Verbrauch. Eine direkte Erfassung des Luftmassenstroms am Einlassventil - der für die Prozesssteuerung/-regelung unabdingbar ist - ist aus technischen Gründen nicht möglich. Aus diesem Grund müssen für die Steuerung/Regelung der Brennkraftmaschine genaue mathematische Modelle zur Berechnung der am Einlassventil vorliegenden Verhältnisse des Luftmassenstroms angewendet werden. Dies erfolgt beispielsweise auf der Basis von Drucksensoren, Massenstromsensoren am Eingang der Sauganlage (z.B. HFM-Sensoren) oder anhand von Istgrößen der Stellglieder (z.B. der Drosselklappe). Diese modellbasierte Berechnung der Last wird als Lasterfassung bezeichnet. Zusätzlich zur Lasterfassung muss in der Steuerung der Brennkraftmaschine eine Laststeuerung realisiert werden. Hierfür ist der Last-Sollwert, der aus dem Momentenwunsch des Fahrers resultiert, in die Sollwerte für die Laststellglieder umzurechnen. Bei einem Motor mit verstellbarem Ventilhub und/oder verstellbaren Ventilsteuerzeiten (z.B. Valvetronicmotor) kommen als zu berechnende Lastsollwerte (Lasterfassung) insbesondere folgende Größen in Betracht: Drosselklappenstellung, Einlassventilhub, Auslassventilhub, Einlasssteuerzeit, Auslasssteuerzeit.

Auch für die Laststeuerung müssen Berechnungsmodelle in der Steuerung/Regelung abgelegt sein, in denen der Zusammenhang zwischen der Last und den Positionen bzw. Werten der Laststellglieder abgebildet ist. Die beiden über Prozessmodelle nachzubildenden Steuerungsfunktionen Laststeuerung und Lasterfassung unterscheiden sich bezüglich der Anforderungen, die an die jeweiligen Luftmassenmodelle gestellt werden grundsätzlich: Zum Einen sollte das für die Lasterfassung verwendete Prozessmodell möglichst genau den nachzubildenden Prozess abbilden. Da für die Lasterfassung eine Invertierbarkeit nicht zwingend erforderlich ist, eine erhöhte GenauigKeit aber gewunscht ist, wird hierfür ein insgesamt nicht invertierbares Prozessmodell verwendet. Dabei ist ein erstes Prozessmodell für die Lasterfassung invertierbar ausgebildet um hieraus durch Invertierung auf das Prozessmodell für die Vorsteuerung (Laststeuerung) schließen zu können - während ein zweites Prozessmodells für die Lasterfassung nicht invertierbar ausgebildet ist um hierdurch ggf. eine erhöhte Genauigkeit für die Lasterfassung zu erreichen.

Zum Anderen sollte das für die Laststeuerung verwendete Prozessmodell invertierbar sein, da die Ansteuerung der Laststellglieder auf dem invertierten Luftmassenmodell basieren muss. Durch die Verwendung eines invertierten bzw. invertierbaren Prozessmodells in der Vorsteuerung (Laststeuerung) wird gewährleistet, dass in stationären Betriebspunkten die Last-Sollwerte und die LastIstwerte gleich sind und somit das Funktionieren der sogenannten Momentenstruktur der Steuerung gewährleistet wird.
Andere Ausführungen der Erfindung sind in den Unteransprüchen beschrieben.

Im Folgenden wird die Erfindung anhand von Figuren näher erläutert. Es zeigen:
- Figur 1:: die schematische Darstellung eines Prozesssteuersystems gemäß dem Stand der Technik,
- Figur 2:: die schematische Darstellung eines Prozesssteuersystems gemäß der Erfindung und
- Figur 3:: eine beispielhafte Ausführungsform eines erfindungsgemäßen Prozesssteuersystems zur Befüllung des Brennraums eines Kraftfahrzeugs.

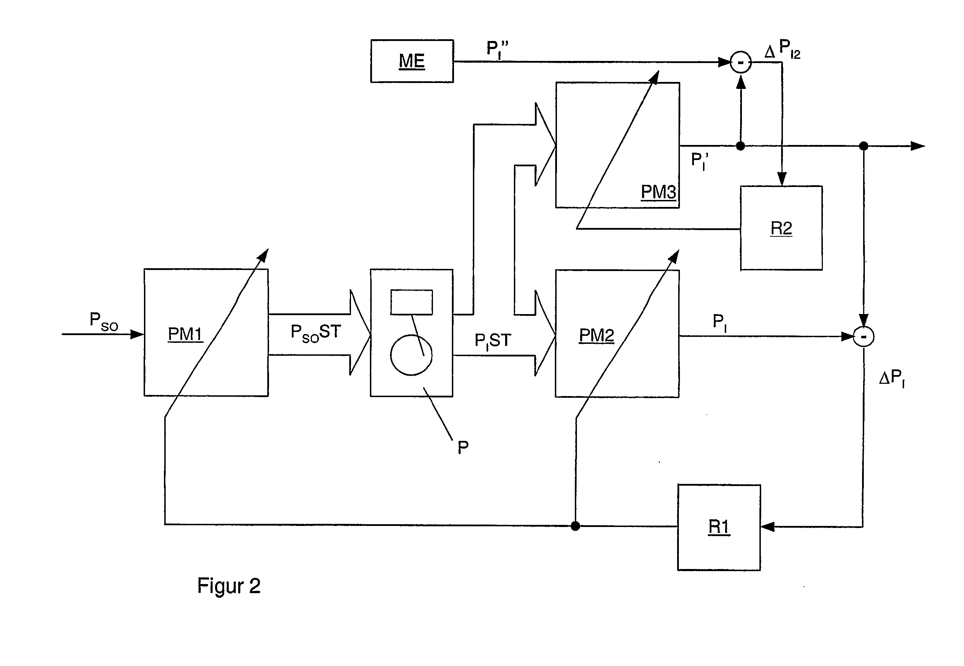

Figur 2 zeigt ein Prozesssteuersystem gemäß der Erfindung mit einem ersten Prozessmodell PM1 zur Vorsteuerung eines Prozesses P, einem zweiten, invertierbaren Prozessmodell PM2 (invertierte Vorsteuerung) zur Prozesssteuerung, einem dritten, nicht invertierbaren Prozessmodell PM3 zur sehr genauen Nachbildung des zu steuernden Prozesses und einer ersten Regeleinheit R1, die aus der Differenz der Istwerte, die aus den beiden Prozessmodellen PM2, PM3 zur Prozesssteuerung generiert werden, eine Stellgröße zur Rückführung auf die beiden invertierbaren Prozessmodelle PM1, PM2 generiert. Auf diese Weise wird ein einfaches Prozessmodell (invertierbares Prozessmodell) mit einem möglichst genauen Prozessmodell (nicht invertierbares Prozessmodell) kombiniert und hierdurch zum Einen die Forderung der Invertierbarkeit des zu steuernden Prozesses und zum Anderen die Forderung nach einer ausreichend genauen Nachbildung des zu steuernden Prozesses erfüllt.

In einer bevorzugten Weiterbildung der Erfindung, wird zusätzlich zur modellgestützten Nachbildung eines Prozess-Istwertes durch das nicht invertierbare Prozessmodell PM3 der gewünschte Prozess-Istwert mittels einer Messeinrichtung ME quasi stationär gemessen, mit dem über das nicht invertierbare Prozessmodell ermittelten Prozess-Istwert verglichen und die Vergleichsdifferenz über eine zweite Regeleinheit R2 auf das nicht invertierbare Prozessmodell PM3 zurückgeführt.

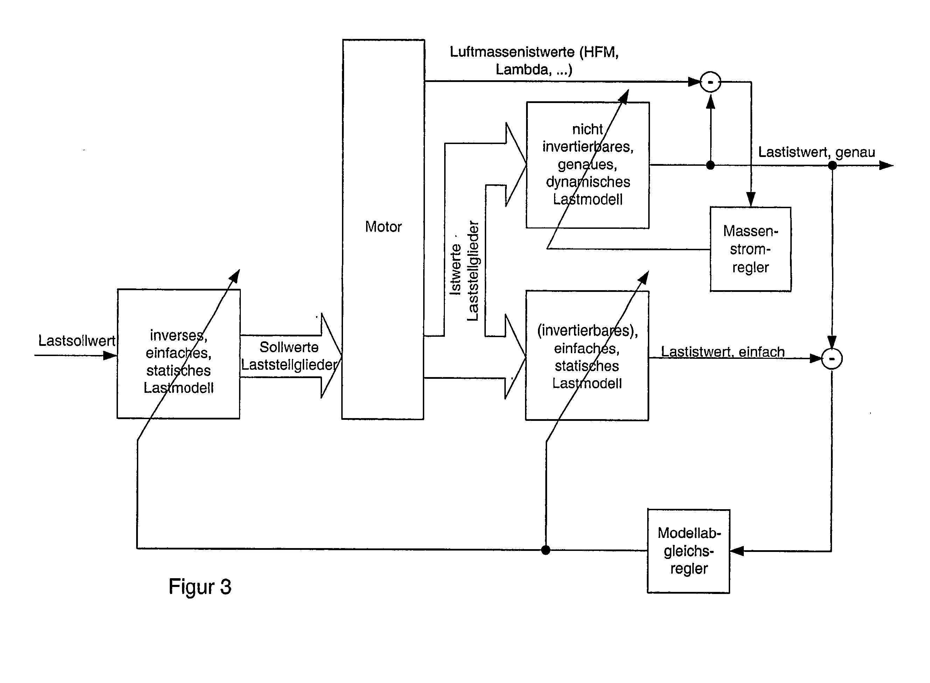

In der Figur 3 ist das erfindungsgemäße Prozesssteuersystem analog zu Figur 2 dargestellt und in seiner Anwendung am Beispiel des Prozesses P zur Befüllung des Brennraums eines Zylinders einer Brennkraftmaschine veranschaulicht.

Zur Luftmassenvorsteuerung (Laststeuerung) findet hier ein einfaches (invertierbares) Prozessmodell PM1, PM2 Anwendung, dessen Hauptbestandteil ein Lastkennfeld ist, in dem ein Prozess-Istwert des Lastsignals über dem Istwert des Einlassventilhubes und der Motordrehzahl aufgespannt ist (Hubvorsteuerkennfeld). Der im Lastkennfeld abgelegte Prozess-Istwert (Lastwert P₁) ist in jedem Kennfeldpunkt jeweils nur für genau eine Referenzkombination von Ventileinlass- und Ventilauslasssteuerzeiten gültig. Weichen die Ventileinlass-/Ventilauslasssteuerzeiten von dieser Referenzkombination ab, so wird das Prozessmodell an diese Abweichung angepasst. Das Lastkennfeld ist derart appliziert, dass das Lastsignal stets monoton mit dem Sollwert des Einlassventilhubs steigt. Dadurch kann mit dem einfachen statischen Modell durch einfache Invertierung des Kennfeldes ein Kennfeld zur Vorsteuerung des Einlassventilhubs berechnet werden, welches exakt invers zum einfachen statischen Lastmodell ist. Dieses Hubvorsteuerkennfeld hat somit als Eingangsgrößen den Sollwert der Last und die Motordrehzahl sowie als Ausgangsgröße den Sollwert für den Einlassventilhub.

Die Berechnung der tatsächlich in die Zylinder der Brennkraftmaschine einströmenden Luftmasse (Lasterfassung) erfolgt erfindungsgemäß anhand eines sehr genauen (nicht invertierbaren) dynamischen Prozessmodells PM3. Das genaue Prozessmodell PM3 umfasst dabei Teilmodelle für zumindest die wesentlichen, die Befüllung eines Zylinderbrennraums beeinflussenden Komponenten der Sauganlage. Insbesondere umfasst das genaue Prozessmodell PM3 (in Fließrichtung der Luft betrachtet) ein Luftfiltermodell zur Nachbildung des Luftmassenstroms in der Luftfiltereinheit, ein Drosselklappenmodell zur Nachbildung des Luftmassenstroms im Bereich vor und hinter der Drosselklappe, ein Behältermodell für das Saugrohr zur Nachbildung des Luftmassenstroms im Saugrohr und ein Einlassventilmodell zur Nachbildung des Luftmassenstroms im Bereich des Einlassventils. Wesentlich für das genaue dynamische Prozessmodell ist, dass die über die Drosselklappe zu- und über die Einlassventile abfließenden Luftmassenströme modelliert werden. Der Drosselklappenmassenstrom ergibt sich aus dem Druckverhältnis über der Drosselklappe und dem aktuellen Istwert des Drosselklappenwinkels. Der Massenstrom über das Einlassventil wird in Abhängigkeit des Saugrohrdruckes, des Abgasgegendruckes, sowie der Istwerte von Einlassventilhub, Einlasssteuerzeit und Auslasssteuerzeit modelliert. Hierfür wird ein nichtlineares statisches Modell verwendet, das den Massenstrom in Abhängigkeit von den genannten Eingangsgrößen abbildet (sogenannte Schluckkennlinien). Durch Bilanzierung von Drosselklappen- und Einlassventilmassenstrom und Anwendung der Gasgleichung wird die Druckänderung im Saugrohr modelliert. Durch Integration wird der Absolutwert des Saugrohrdruckes berechnet, der dann wieder Eingangsgröße für die Massenstrommodellierungen an Drosselklappe und Einlassventil ist.

Mittels des Modellabgleichs werden das genaue dynamische Prozessmodell PM3 und das einfache statische Prozessmodell PM2 abgeglichen. Der Abgleich erfolgt mittels einer Regeleinheit R1 in Form eines Modellabgleichreglers, der insbesondere als PI-Regler ausgeführt ist. Eingangsgröße des Modellabgleichreglers ist die Differenz zwischen dem genauen dynamischen Prozessmodell PM3 und dem statischen Prozessmodell PM2. Ausgangsgröße des Massenstromreglers ist eine Korrekturgröße, mit der das einfache statische Prozessmodell PM1, PM2 angepasst wird. Diese Korrektur des einfachen statischen Prozessmodells PM1, PM2 erfolgt sowohl in der Vorsteuerung (Prozessmodell PM1) als auch im invertierten Pfad (Prozessmodell PM2), so dass das einfache statische Prozessmodell PM2 auch noch trotz des Modellabgleichs invertierbar bleibt. Der Modellabgleich erfolgt so langsam, dass dynamische Effekte, die im dynamischen genauen Prozessmodell PM3 abgebildet werden, die aber im einfachen statischen Prozessmodell PM2 prinzipbedingt nicht berücksichtigt werden können, nicht ausgeregelt werden. Stattdessen werden lediglich die Stationärwerte der beiden Prozessmodelle PM3, PM2/PM1 aufeinander abgeglichen. Nach erfolgtem Modellabgleich entspricht die Last des einfachen statischen Prozessmodells PM2 also der des dynamischen genauen Prozessmodells PM3. Zusätzlich sind wegen der immer noch vorhandenen Inversion des einfachen statischen Prozessmodells PM2 die Last-Soll- und Lastistwerte gleich.

Da trotz der sehr hohen Genauigkeit des genauen dynamischen Prozessmodells PM3 noch Modellfehler gegenüber der real in die Zylinder einströmenden Luftmasse auftreten, wird in einer Weiterbildung der Erfindung die real einströmende Luftmasse quasi stationär sehr genau mittels einer Messeinrichtung ME - z.B. mittels eines HFM-Sensors am Saugrohreingang oder mittels einer Lambdasonde im Abgastrakt - gemessen und für den Abgleich des genauen dynamischen Modells verwendet. Der Abgleich erfolgt mittels einer weiteren Regeleinheit R2 - z.B. einem Massenstromregler, der mit Vorteil ebenfalls als PI-Regler und mit einem zusätzlichen adaptiven neuronalen Netz ausgeführt ist. Eingangsgröße des Massenstromreglers ist die Differenz zwischen der realen Luftmasse und dem Modell-Luftmassenstrom aus dem genauen dynamischen Prozessmodell PM3 . Ausgangsgröße des Massenstromreglers ist eine Korrekturgröße, mit der das genaue dynamische Prozessmodell PM3 angepasst wird.

## Patentansprüche

1. Prozesssteuersystem zur Steuerung von mindestens einem Prozessstellglied (P) mit
- einem ersten Prozessmodell (PM1) für die Ansteuerung des mindestens einen Prozessstellglieds (P) derart, dass aus mindestens einer, dem ersten Prozessmodell (PM1) zugeführten Prozess-Sollgröße (P_{So}) mindestens eine Prozess-Sollstellgröße (PₛₒSt) für die Ansteuerung des mindestens einen Prozessstellgliedes (P) generiert wird,
- einem zweiten Prozessmodell (PM2) welches aus mindestens einer Prozess-Iststellgröße (P₁St) des mindestens einen Prozessstellgliedes (P) eine Prozess-Istgröße (P₁) generiert,
- einem weiteren Prozesselement zur Generierung einer Vergleichs-Prozess-Istgröße (P₁'),
- wobei das erste Prozessmodell (PM1) durch Invertierung des zweiten Prozessmodells (PM2) abbildbar ist,
- und wobei eine aus Prozess-Istgröße (P₁) und Vergleichs-Prozess-Istgröße (P₁') gebildete Prozess-Istgrößen-Differenz (ΔP₁) über eine Regeleinheit (R1) auf das erste und das zweite Prozessmodell (PM1; PM2) geführt ist,
**dadurch gekennzeichnet, dass**
- das Prozesselement als drittes Prozessmodell (PM3) mit erhöhter Nachbildungsgenauigkeit ausgebildet ist und zumindest einen nichtinvertierbaren Prozessbestandteil aufweist.

2. Prozesssteuersystem nach Anspruch 1,
**gekennzeichnet durch** Mittel (ME) zur messtechnischen Erfassung einer Vergleichs-Prozess-Istgröße (P₁"), wobei eine aus der gemessenen Vergleichs-Prozess-Istgröße (P₁") und der über das dritte Prozessmodell (PM3) ermittelten Prozess-Istgröße (P₁') gebildete weitere Prozess-Istgrößen-Differenz (ΔP₁₂) über eine weitere Regeleinheit (R2) auf das dritte Prozessmodell (PM3) geführt ist.

3. Prozessteuersystem nach einem der vorstehenden Ansprüche,
**dadurch gekennzeichnet, dass** das dritte Prozessmodell (PM3) eine Mehrzahl einzelner Teilprozessmodelle umfasst - insbesondere umfasst das dritte Prozessmodell (PM3) ein Luftfiltermodell zur Nachbildung des Luftmassenstroms im Bereich der Luftfiltereinheit, ein Drosselklappenmodell zur Nachbildung des Luftmassenstroms im Bereich der Drosselklappenanordnung, ein Saugrohr-Behältermodell zur Nachbildung der Druckverhältnisse innerhalb des Saugrohres und ein Einlassventilmodell zu Nachbildung des Einlassventil-Luftmassenstroms im Bereich der Einlassventilanordnung.

4. Prozessteuersystem nach Anspruch 3,
**dadurch gekennzeichnet, dass** das Drosselklappenmodell derart ausgebildet ist, dass es anhand der ermittelten Größen von zumindest:
- aktuelles Druckverhältnis über der jeweiligen Drosselklappe und dem
- jeweils zugehörigen Drosselklappenwinkel
den Luftmassenstroms im Bereich der bzw. jeder Drosselklappe generiert.

5. Prozessteuersystem nach Anspruch 3 oder 4,
**dadurch gekennzeichnet, dass** das Einlassventilmodell derart ausgebildet ist, dass es anhand der ermittelten Größen von zumindest:
- Saurohrdruck,
- Abgasgegendruck,
- Istwert des Einlassventilhubs,
- Istwert der Einlasssteuerzeit und dem
- Istwert der Auslasssteuerzeit
den Luftmassenstrom im Bereich des bzw. jedes Einlassventils generiert

6. Prozessteuersystem nach Anspruch 5,
**dadurch gekennzeichnet, dass** das Einlassventilmodell zur Generierung des Luftmassenstroms im Bereich des Einlassventils nichtlineare Schluckkennlinien umfasst.

## Claims

1. A process control system for controlling at least one process actuator, comprising
- a first process model (PM1) for controlling the at least one process actuator in such a way that at least one process desired variable (PₛₒSt) for controlling the at least one process actuator (P) is generated from at least one process control variable (Pₛₒ) supplied to the first process model (PM1),
- a second process model (PM2), which generates a process actual variable (P₁) from at least one process actual control variable (P₁St) of the at least one process actuator (P),
- a further process element for generating a comparison process actual variable (P₁'),
- wherein the first process model (PM1) can be mapped by inverting the second process model (PM2),
- and wherein a process actual variable difference (ΔP₁) formed from the process actual variable (P₁) and the comparison process actual variable (P₁') is fed via a regulating unit (R1) to the first and the second process model (PM1; PM2), **characterised in that**
- the process element is configured as a third process model (PM3) with an increased reproduction precision and has at least one non-invertible process component.

2. A process control system according to claim 1, **characterised by** means (ME) for measuring a comparison process actual variable (P₁"), wherein a further process actual variable difference (ΔP₁₂) formed from the measured comparison process actual variable (P₁") and the process actual variable (P₁') determined via the third process model (PM3) is fed via a further regulating unit (R2) to the third process model (PM3).

3. A process control system according to any one of the preceding claims, **characterised in that** the third process model (PM3) comprises a plurality of individual part process models - more especially, the third process model (PM3) comprises an air filter model for reproducing the air mass flow in the region of the air filter unit, a throttle valve model for reproducing the air mass flow in the region of the throttle valve arrangement, a suction pipe container model for reproducing the pressure ratios inside the suction pipe and an inlet valve model for reproducing the inlet valve air mass flow in the region of the inlet valve arrangement.

4. A process control system according to claim 3, **characterised in that** the throttle valve model is configured in such a way that with the aid of the determined variables of at least:
- the current pressure ratio over the respective throttle valve and the
- respectively associated throttle valve angle,
it generates the air mass flow in the region of the, or of each, throttle valve.

5. A process control system according to claim 3 or 4, **characterised in that** the inlet valve model is configured in such a way that with the aid of the determined variables of at least:
- the suction pipe pressure,
- exhaust gas counter-pressure,
- actual value of the inlet valve lift,
- actual value of the inlet timing and the
- actual value of the outlet timing,
it generates the air mass flow in the region of the, or each, inlet valve.

6. A process control system according to claim 5, **characterised in that** the inlet valve model for generating the air mass flow in the region of the inlet valve comprises non-linear absorption characteristics.

## Revendications

1. Système de commande de processus pour commander au moins un actionneur de processus comprenant :
- un premier modèle de processus (PM1) pour commander au moins un actionneur de processus de façon qu'à partir d'au moins une grandeur de consigne de processus (P_{SO}), appliquée au premier modèle de processus (PM1), on génère au moins une grandeur d'actionnement de consigne de processus (P_{SO}St) pour commander au moins un actionneur de processus,
- un second modèle de processus (PM2) qui, à partir d'au moins une grandeur d'actionnement réelle de processus (P₁St) d'au moins un actionneur de processus, génère une grandeur réelle de processus (P₁),
- un autre élément de processus pour générer une grandeur réelle de processus de comparaison (P₁'),
- le premier modèle de processus (PM1) étant copié par inversion du second modèle de processus (PM2), et
- une différence des grandeurs réelles de processus (ΔP₁) formées à partir de la grandeur réelle de processus (Pₗ) et de la grandeur réelle de processus de comparaison (P₁'), est appliquée par une unité de régulation (R1) au premier et au second modèle de processus (PM1, PM2),
**caractérisé en ce que**
l'élément de processus est réalisé comme troisième modèle de processus (PM3) avec une précision de copie augmentée et au moins une partie de processus non réversible.

2. Système de commande de processus selon la revendication 1,
**caractérisé par**
des moyens (ME) pour la saisie en technique des mesures d'une grandeur réelle de processus de comparaison (P₁"), selon lequel, une autre différence de grandeur réelle de processus (ΔP₁₂) formée à partir de la grandeur réelle de processus de comparaison (P₁"), mesurée et de la grandeur réelle de processus (P₁') déterminée par le troisième modèle de processus (PM3), est appliquée par une autre unité de régulation (R2) au troisième modèle de processus (PM3).

3. Système de commande de processus selon l'une quelconque des revendications précédentes,
**caractérisé en ce que**
le troisième modèle de processus (PM3) comprend plusieurs modèles partiels de processus, séparés - comprend notamment le troisième modèle de processus (PM3), un modèle de filtre à air pour imiter le débit massique d'air au niveau de l'unité de filtre à air, un modèle de volet d'étranglement pour imiter le débit massique d'air au niveau du volet d'étranglement, un modèle de réservoir de tubulure d'admission pour imiter les conditions de pression dans la tubulure d'admission et un modèle de soupape d'admission pour imiter le débit massique d'air au niveau de la soupape d'admission, dans la zone du dispositif de soupape d'admission.

4. Système de commande de processus selon la revendication 3,
**caractérisé en ce que**
le modèle de volet d'étranglement est réalisé pour générer le débit massique d'air au niveau des ou de chaque volet d'étranglement, à l'aide des grandeurs déterminées :
- rapport actuel de pression au niveau du volet d'étranglement respectif, et
- de l'angle respectif du volet d'étranglement.

5. Système de commande de processus selon l'une quelconque des revendications 3 ou 4,
**caractérisé en ce que**
le modèle de soupape d'admission est réalisé pour générer le débit massique d'air au niveau de chaque soupape d'admission à partir des grandeurs déterminées suivantes :
- pression dans la tubulure d'admission,
- contre-pression des gaz d'échappement,
- valeur réelle de la course de la soupape d'admission,
- valeur réelle du temps de commande d'admission, et
- valeur réelle du temps de commande d'échappement.

6. Système de commande de processus selon la revendication 5,
**caractérisé en ce que**
le modèle de soupape d'admission comprend des lignes caractéristiques d'admission, non linéaires pour générer le débit massique d'air au niveau de la soupape d'admission.
